# EUROPEAN PATENT APPLICATION

(11) **EP 4 818 946 A1**
(43) Date of publication of application: **07.10.2026**
(21) Application number: 24896989.1
(22) Date of filing: 07.08.2024
(51) Int. Cl.: G06F 21/57

(54) **SECURITY COUNTERMEASURE DETERMINATION DEVICE AND SECURITY COUNTERMEASURE DETERMINATION METHOD**

(30) Priority: 29.11.2023 JP 2023202004
(71) Applicant: Hitachi, Ltd., Tokyo 100-8280 (JP)
(72) Inventor: OGURA Takashi, Tokyo 100-8280 (JP); SAKATA Kosei, Tokyo 100-8280 (JP); NAGAYAMA Tsuyoshi, Tokyo 100-8280 (JP)
(74) Representative: MERH-IP Matias Erny Reichl Hoffmann Patentanwälte PartG mbB
(86) International application number: PCT/JP2024/028307
(87) International publication number: WO 2025/115297

(57) **Abstract**

A security countermeasure determination holds: information indicating a target system of a security countermeasure, a target component included in the target system, and a specification of the target system and the target component; and information indicating a first-level countermeasure for a component, a first constraint condition related to a specification of the component for implementing the first-level countermeasure, a second-level countermeasure for a system, and a second constraint condition related to a specification of the system for implementing the second-level countermeasure,
identifies a first-level countermeasure that is implementable for the target component based on the specification of the target component and the first constraint condition, and identifies a second-level countermeasure that is implementable for the target system based on the specification of the target system and the second constraint condition.

## Description

### Claim of Priority

The present application claims priority from Japanese patent application JP 2023-202004 filed on November 29, 2023, the content of which is hereby incorporated by reference into this application.

### Technical Field

The present invention relates to a security countermeasure determination device and a security countermeasure determination method.

### Background Art

With the promotion of digital transformation (DX), there is an increasing threat of cyberattacks in which various and many elements (device, operating system (OS), software, subsystem, cloud, and the like) are complicatedly intertwined.

Therefore, in order to achieve a safe and safe industrial control system, security countermeasures against the cyberattacks are required. As represented by the European cyber resilience act and Japan's economic security promotion act, the legal regulation of security countermeasures and the standardization of security countermeasures for industrial control systems, as represented by ISO/IEC 62443, are progressing.

In the future, it is required to implement security countermeasures conforming to the legal regulations and standards described above. However, in order to ensure generality, security countermeasures required by legal regulations and standards have abstract contents and expressions, and there is a deviation from countermeasure contents that can be implemented in an actual system. Thus, a method for achieving the security countermeasures required by the legal regulations and standards is achieved by selecting from a plurality of candidates or a combination thereof. Therefore, a method for determining an appropriate countermeasure or a combination of appropriate countermeasures from the plurality of security countermeasure candidates is required.

As a background art of the present technical field, there is JP 2015-130152 A (Patent Literature 1). This publication describes that "the risk analysis unit identifies a plurality of threats to be handled by a development target data system as target threats. The countermeasure analytics unit extracts a security countermeasure for each target threat. The optimization execution unit generates a combination pattern of security countermeasures against a plurality of target threats by combining the security countermeasures extracted by the countermeasure analytics unit, performs analytics on an effect generated by the combination of the security countermeasures included in the combination pattern for each combination pattern, calculates an implementation influence value indicating an influence on the development target data system in a case where the combination of the security countermeasures is implemented, and selects a specific combination pattern on the basis of the calculated implementation influence value" (see abstract).

### Prior Art Literature

### Patent Literature

Patent Literature 1: JP 2015-130152 A

### Summary of Invention

### Technical Problem

The technique described in PTL 1 determines a security countermeasure for a component constituting a system. However, security countermeasures required by many legal regulations and standards include not only countermeasures at a component level described above but also countermeasures at various levels, such as system-level countermeasures, through design refinements in system configuration and settings or the like. Therefore, in the technique described in Patent Literature 1, there is a possibility that a security countermeasure at a level other than the component level is not presented, that is, an appropriate security countermeasure is not presented. In addition, in many legal regulations and standards, it is not identified which level of security countermeasures is to be implemented, and it takes time (man-hours) to determine the security countermeasures to be implemented. In this regard, an aspect of the present invention appropriately and quickly determines a plurality of levels of security countermeasures.

### Solution to Problem

The aspect of the present invention adopts the following structures in order to solve the above problem. A security countermeasure determination device comprises: a processor; and a memory, the memory is configured to hold: target information indicating a target system of a security countermeasure, a specification of the target system, a target component included in the target system, and a specification of the target component; and countermeasure content information indicating a first-level countermeasure that is a security countermeasure for a component, a first constraint condition related to a specification of the component for implementing the first-level countermeasure, a second-level countermeasure that is a security countermeasure for a system, and a second constraint condition related to a specification of the system for implementing the second-level countermeasure, and the processor is configured to: execute first-level countermeasure identifying processing of identifying a first-level countermeasure that is implementable for the target component, on a basis of the specification of the target component and the first constraint condition; execute second-level countermeasure identifying processing of identifying a second-level countermeasure that is implementable for the target system, on a basis of the specification of the target system and the second constraint condition; and generate data for displaying the identified first-level countermeasure and the identified second-level countermeasure.

### Advantageous Effects of Invention

The aspect of the present invention can appropriately and quickly determine a plurality of levels of security countermeasures.

Problems, configurations, and effects which are not mentioned above are explained in the following embodiments.

### Brief Descriptions of Drawings

Fig. 1 is a block diagram illustrating a functional configuration example of a security countermeasure determination device according to the first embodiment.
Fig. 2 is a block diagram illustrating a hardware configuration example of the security countermeasure determination device according to the first embodiment.
Fig. 3A is an explanatory diagram illustrating an example of a countermeasure target according to the first embodiment.
Fig. 3B is a diagram illustrating a data configuration example of target information according to the first embodiment.
Fig. 4 is a diagram illustrating a data configuration example of a countermeasure content table according to the first embodiment.
Fig. 5 is a flowchart illustrating an example of component countermeasure determination processing according to the first embodiment.
Fig. 6 is a flowchart illustrating an example of system countermeasure examination determination according to the first embodiment.
Fig. 7 is a flowchart illustrating an example of operation countermeasure examination determination processing according to the first embodiment.
Fig. 8 is a diagram illustrating a screen configuration example of a countermeasure content output screen according to the first embodiment.
Fig. 9 is a block diagram illustrating a functional configuration example of the security countermeasure determination device according to the second embodiment.
Fig. 10 is a flowchart illustrating an example of component countermeasure candidate extraction processing according to the second embodiment.
Fig. 11 is a flowchart illustrating an example of system countermeasure candidate extraction processing according to the second embodiment.
Fig. 12 is a flowchart illustrating an example of countermeasure selection processing according to the second embodiment.
Fig. 13 is a diagram illustrating a screen configuration example of a selection screen according to the second embodiment.
Fig. 14 is a block diagram illustrating a functional configuration example of the security countermeasure determination device according to the third embodiment.
Fig. 15 is a diagram illustrating a data configuration example of the countermeasure content table according to the third embodiment.
Fig. 16 is a diagram illustrating a screen configuration example of the countermeasure content output screen according to the third embodiment.

### Description of Embodiments

Hereinafter, examples of modes for carrying out the present invention (hereinafter, referred to as "embodiments") will be described with reference to the accompanying drawings. In the present specification and the accompanying drawings, the same components or components having substantially the same function are denoted by the same reference numerals, and redundant description is omitted.

### [First Embodiment]

### [Configuration Example of Security Countermeasure Determination Device]

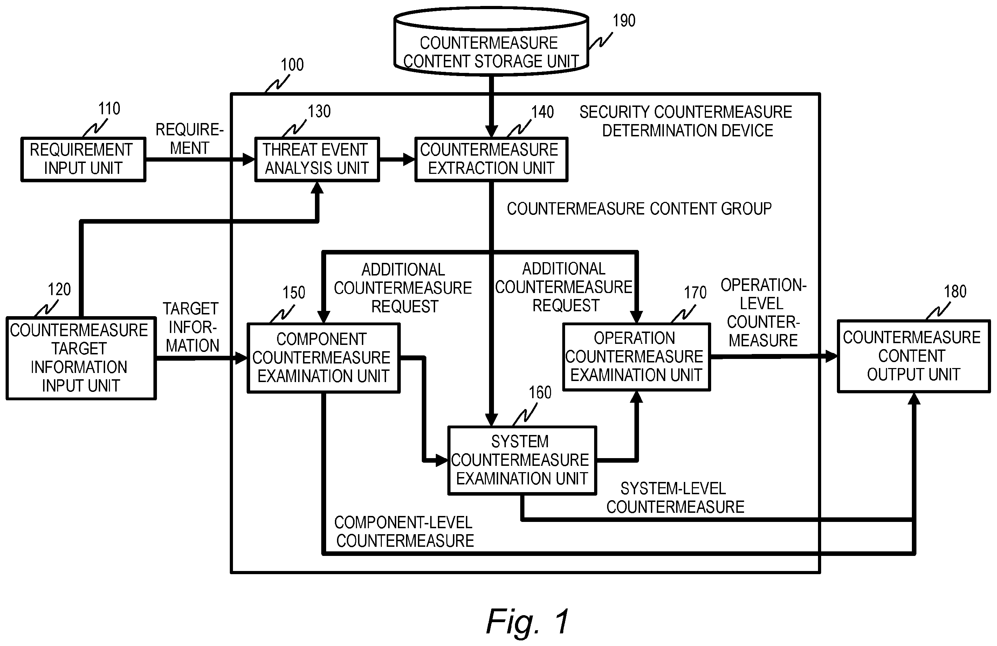

FIG. 1 is a block diagram illustrating a functional configuration example of a security countermeasure determination device. A security countermeasure determination device 100 determines a security countermeasure (hereinafter, also simply referred to as "countermeasure") to be implemented for a security countermeasure target (hereinafter, also simply referred to as "countermeasure target" or "target"). An operation of a facility such as a factory, a system such as an industrial control system installed in the facility, and components constituting the system are all examples of the countermeasure target. The security countermeasure determination device 100 determines a countermeasure for each of target levels, such as operation of a facility, a system, and a component, that have an inclusive relationship. The security countermeasure determination device 100 is an example of an information processing device.

The security countermeasure determination device 100 is connected to a requirement input unit 110 and a countermeasure target information input unit 120. The requirement input unit 110 acquires a requirement in legal regulations and standards (for example, by input from a user or by reception from an external device), and inputs the acquired requirement to the security countermeasure determination device 100.

The requirement input unit 110 may acquire the requirement itself in the legal regulations and standards, or may acquire the sentences of the legal regulations and the standards. In the case of acquiring the sentences of the legal regulations and standards, the requirement input unit 110 extracts a requirement from the sentences by natural language processing using machine learning, deep learning, or the like, and inputs the extracted requirement to the security countermeasure determination device 100.

Note that the requirement input by the requirement input unit 110 may include any rules regarding security for the countermeasure target, such as national laws, international laws, national rules, international rules, industry rules, internal rules, national standards, international standards, industry standards, and internal standards regarding security.

The countermeasure target information input unit 120 acquires information regarding a countermeasure target (hereinafter, also referred to as "target information") (for example, by input from the user or by reception from an external device), and inputs the information to the security countermeasure determination device 100.

The target information includes, for example, a name of a facility such as a factory, an operation form of the facility, and an operation rule of the facility. In addition, the target information includes information indicating a system configuration, such as information indicating the type and number of industrial control systems installed in the facility, and information indicating components (device, OS, software, subsystem, cloud, and the like) constituting each industrial control system. The information regarding the system configuration includes information indicating a connection form between systems and a connection form of a plurality of components in the system.

In addition, as will be described in detail later, there are a constraint condition related to a system for implementing a countermeasure for the industrial control system, a constraint condition related to a component for implementing a countermeasure for each component included in the industrial control system, and the like. The target information includes information for determining whether the industrial control system satisfies the constraint condition related to the system and information for determining whether a component included in the industrial control system satisfies the constraint condition related to the component.

The constraint condition related to the system includes, for example, information regarding a system specification. The information regarding the system specification includes, for example, information regarding communication such as a communication amount of data transmitted and received in the system or between systems, a transmission and reception cycle, and whether or not the communication amount and the cycle can be changed, information regarding whether or not to add or delete a component to the system, and information regarding a function and performance of the system. Thus, the target information includes these pieces of information regarding the industrial control system.

The constraint condition regarding the component includes, for example, information regarding a component specification. The information regarding the component specification indicates, for example, information regarding an element constituting the component (an element included in the component, and a type, a performance, and the like of each element). Specifically, for example, a type of a chip of the CPU included in the component, a type of an OS included in the component, a capacity of a memory included in the component, and the like are all examples of the constraint condition regarding the component. Thus, the target information includes these pieces of information regarding the component.

The requirement input unit 110 and the countermeasure target information input unit 120 can be constituted by, for example, an input device of a communication terminal such as a personal computer (PC) or a communication device that communicates with an external device.

The security countermeasure determination device 100 includes, for example, a threat event analysis unit 130, a countermeasure extraction unit 140, a component countermeasure examination unit 150, a system countermeasure examination unit 160, and an operation countermeasure examination unit 170, all of which are functional units.

The threat event analysis unit 130 converts the requirement input from the requirement input unit 110 into a threat event matching the countermeasure target by using the target information input from the countermeasure target information input unit 120, and outputs information indicating the threat event to the countermeasure extraction unit 140.

For example, the threat event analysis unit 130 acquires the sentence of the legal regulations and standards from the requirement input unit 110, and uses a predetermined natural language processing algorithm to acquire, from the sentence, information regarding a reason why the requirement is required, that is, a threat event to be prevented, thereby identifying a threat event corresponding to the requirement.

In addition, for example, a database indicating a correspondence between the requirement and the threat event may be prepared in advance, and the threat event analysis unit 130 may convert the requirement into the threat event in accordance with the correspondence indicated by the database. In addition, for example, the threat event analysis unit 130 may convert the requirement into the threat event by using external information (for example, a sentence indicating a relationship between the requirement and the threat event, information indicating a correspondence between the requirement and the threat event, and the like) obtained from a website or the like on the Internet. In addition, for example, the threat event analysis unit 130 may convert the requirement into the threat event by using artificial intelligence (AI).

The countermeasure extraction unit 140 extracts, as a countermeasure content group, all the effective countermeasure contents for the threat event converted by the threat event analysis unit 130, on the basis of information in a countermeasure content storage unit 190 connected to the security countermeasure determination device 100.

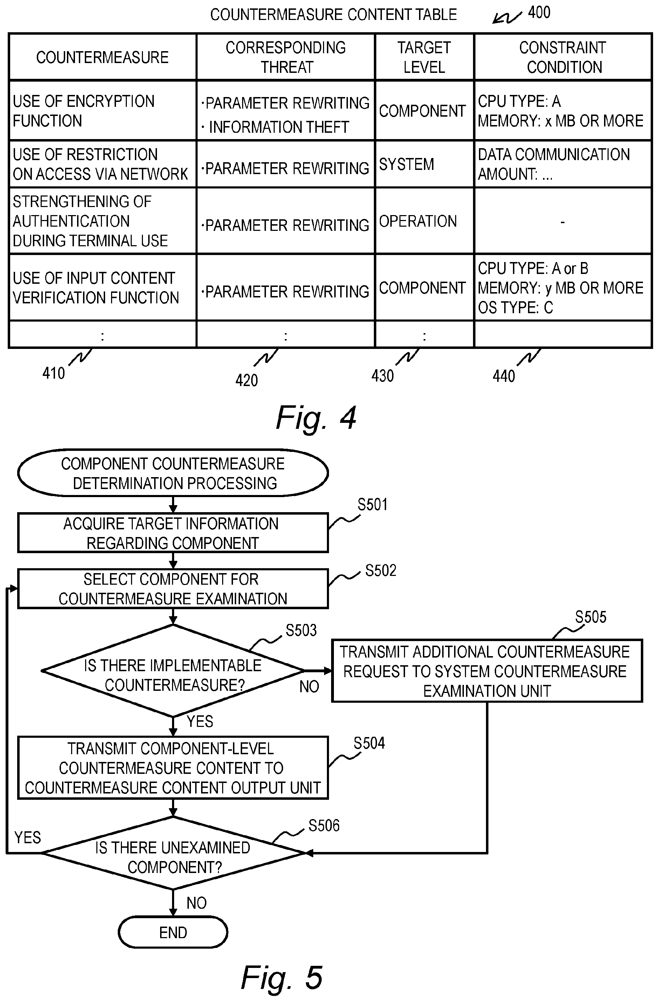

The countermeasure content storage unit 190 stores a countermeasure content table 400 to be described later with reference to FIG. 4. The countermeasure content table 400 indicates, for example, a content of a countermeasure (specific implementation method), a threat event that can be prevented by the countermeasure, and a target on which the countermeasure can be implemented.

By using the target information, for each of the components constituting the industrial control system installed in the facility such as a factory, among the target information input by the countermeasure target information input unit 120, the component countermeasure examination unit 150 examines, for each component, a component-level countermeasure (an example of a first-level countermeasure) that is implementable, among the countermeasure content group extracted by the countermeasure extraction unit 140.

The component countermeasure examination unit 150 outputs, to a countermeasure content output unit 180, a component-level countermeasure that is implementable for each component. In a case where it is determined that there is a component for which there is no component-level countermeasure that is implementable, the component countermeasure examination unit 150 determines that an additional countermeasure is required, and outputs, to the system countermeasure examination unit 160, an additional countermeasure request indicating that an additional countermeasure for a system including the component is required.

By using the target information, for each industrial control system installed in the facility such as a factory, among the target information input by the countermeasure target information input unit 120, the system countermeasure examination unit 160 examines, for each system indicated by the additional countermeasure request from the component countermeasure examination unit 150, a system-level countermeasure (an example of a second-level countermeasure) that is implementable, among the countermeasure content group extracted by the countermeasure extraction unit 140.

The system countermeasure examination unit 160 outputs, to the countermeasure content output unit 180, a system-level countermeasure that is implementable for each system indicated by the additional countermeasure request from the component countermeasure examination unit 150. In a case where it is determined that there is a system for which there is no system-level countermeasure that is implementable, the system countermeasure examination unit 160 determines that an additional countermeasure is required, and outputs, to the operation countermeasure examination unit 170, an additional countermeasure request indicating that an additional countermeasure for operation is required.

In the case of receiving the additional countermeasure request from the system countermeasure examination unit 160, by using the target information, regarding the operation of the facility such as a factory for which the countermeasure is implemented, among the target information input by the countermeasure target information input unit 120, the operation countermeasure examination unit 170 extracts an operation-level countermeasure (an example of a third-level countermeasure) from the countermeasure content group extracted by the countermeasure extraction unit 140, and outputs the operation-level countermeasure to the countermeasure content output unit 180.

Note that the component-level countermeasure is a countermeasure implemented for each component. In addition, the system-level countermeasure is a countermeasure implemented for each system (as a whole system). The operation-level countermeasure is a countermeasure related to the operation of the facility (for example, an operational countermeasure applied collectively to all systems included in the facility).

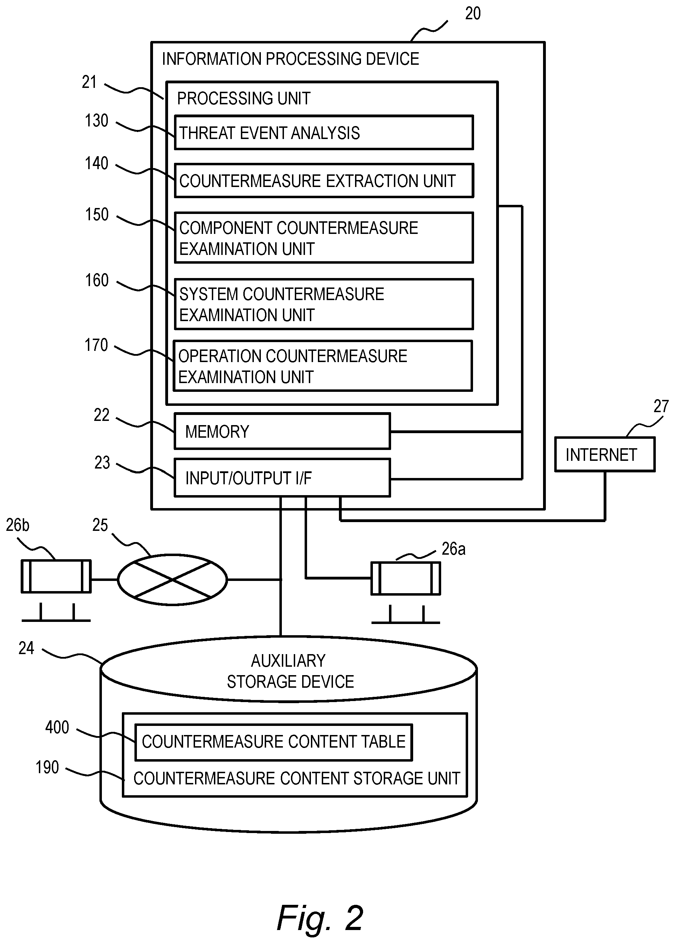

The countermeasure content output unit 180 outputs information indicating the component-level countermeasure output from the component countermeasure examination unit 150, the system-level countermeasure output from the system countermeasure examination unit 160, and the operation-level countermeasure output from the operation countermeasure examination unit 170 to display screens of a terminal device 26a and a terminal device 26b (described later with reference to FIG. 2) connected to the security countermeasure determination device 100. In the example of FIG. 1, the countermeasure content output unit 180 is provided outside the security countermeasure determination device 100, but may be incorporated in the security countermeasure determination device 100.

### [Hardware Configuration Example of Security Countermeasure Determination Device]

FIG. 2 is a block diagram illustrating a hardware configuration example of the security countermeasure determination device 100. The security countermeasure determination device 100 includes an information processing device 20 and an auxiliary storage device 24. Note that the information processing device 20 may incorporate the auxiliary storage device 24.

The information processing device 20 is, for example, a computer including a processing unit 21, a memory 22, and an input/output interface (I/F) 23, each of which is connected to a bus. The processing unit 21, the memory 22, and the input/output I/F 23 are hardware used for the computer.

The processing unit 21 achieves the functions of the above-described functional units (the threat event analysis unit 130, the countermeasure extraction unit 140, the component countermeasure examination unit 150, the system countermeasure examination unit 160, and the operation countermeasure examination unit 170) by executing programs stored in the memory 22. The processing unit 21 includes a processor, and is configured by, for example, a central processing unit (CPU). The processing unit 21 may be configured by a micro-processing unit (MPU) or the like instead of the CPU.

The memory 22 includes, for example, a read only memory (ROM) and a random access memory (RAM). The ROM stores an invariable program (for example, basic input/output system (BIOS)) and the like. The RAM is a high-speed and volatile storage element such as a dynamic random access memory (DRAM), and a program executed by the processing unit 21 and data used when the program is executed by the processing unit 21 (variables, parameters, and the like generated in the middle of processing) are temporarily written in the RAM.

As the auxiliary storage device 24, a large-capacity non-volatile storage device is used. The auxiliary storage device 24 is, for example, a hard disk drive (HDD), a solid state drive (SSD), a non-volatile random access memory (NVRAM), or the like.

In addition to an operating system (OS) and various parameters, a program or the like for causing a computer of the information processing device 20 to function may be recorded in the auxiliary storage device 24. That is, the program is read from the auxiliary storage device 24, loaded into the memory 22, and executed by the processing unit 21.

The processor included in the processing unit 21 functions as the threat event analysis unit 130 by operating in accordance with the threat event analysis program loaded in the memory 22, and functions as the countermeasure extraction unit 140 by operating in accordance with the countermeasure extraction unit program loaded in the memory 22. The other functional units included in the security countermeasure determination device 100 have the same relationship with the program.

A part or all of the program executed by the processing unit 21 may be provided from a removable medium (flexible disk, optical disk, magneto-optical disk, CD-ROM, CD-R, non-volatile memory card, or the like) that is a non-transitory storage medium or an external computer including a non-transitory storage device to the information processing device 20 via a network, and may be stored in a non-volatile storage device that is a non-transitory storage medium included in the information processing device 20. Therefore, the information processing device 20 preferably includes an interface for reading data from a removable medium.

The countermeasure content storage unit 190 is achieved by a part of a storage area of the auxiliary storage device 24. The countermeasure content storage unit 190 stores the countermeasure content table 400. Note that part or all of the information stored in the auxiliary storage device 24 in FIG. 2 may be stored in the memory 22.

Note that, in the present embodiment, the information used by security countermeasure determination device 100 may be expressed by any data structure without depending on the data structure. In the present embodiment, the information is expressed in a table format, but for example, a data structure appropriately selected from a list, a database, or a queue can store the information.

An input/output I/F 23 is a device that controls input and output of data performed between the information processing device 20 and another device. The input/output I/F 23 includes, for example, a network interface device that controls communication with another device according to a predetermined protocol. In addition, for example, the input/output I/F 23 includes an interface device to which, for example, a keyboard, a mouse, or the like is connected and which receives an input from an operator. In addition, the input/output I/F 23 includes, for example, an interface device to which a display, a printer, or the like is connected and which outputs an execution result of the program in a format that can be visually recognized by the operator. In addition, the input/output I/F 23 includes, for example, a serial interface such as a universal serial bus (USB).

In the present embodiment, for example, the auxiliary storage device 24, the terminal device 26a, the terminal device 26b, and the like are connected to the input/output I/F 23. Note that the requirement input unit 110, the countermeasure target information input unit 120, and the countermeasure content output unit 180 may be configured by the input/output I/F 23.

Note that the security countermeasure determination device 100 is a computer system configured physically on one computer or on a plurality of computers configured logically or physically, and may operate on separate threads on the same computer or may operate on a virtual computer constructed on a plurality of physical computer resources.

The terminal device 26a communicates with the information processing device 20 by using, for example, a closed circuit network such as a dedicated line. The terminal device 26a is used in an on-premises system. When an engineer, an administrator, or the like operates an input device such as a keyboard connected to the terminal device 26a, information regarding a countermeasure target and information regarding a requirement are input, and these pieces of information are transmitted to the information processing device 20 of the security countermeasure determination device 100.

The terminal device 26b communicates with the information processing device 20 via a network 25. Similarly to the terminal device 26a, when the engineer, the administrator, or the like operates an input device such as a keyboard connected to the terminal device 26b, information regarding a countermeasure target and information regarding a requirement are input, and these pieces of information are transmitted to the information processing device 20 of the security countermeasure determination device 100.

The network 25 may be, for example, a wireless network or a wired local area network (LAN) that provides a plurality of topologies.

The Internet 27 is an example of a public network. The information processing device 20 constituting the security countermeasure determination device 100 communicates with a communication device such as a cloud or an external factory via the Internet 27. The public network may be a wireless communication infrastructure (wireless network) provided by a line provider.

Note that each of the terminal device 26a and the terminal device 26b includes a processing unit (processor), a memory, an input/output I/F, and a storage device (non-volatile storage), and the processing unit executes a program stored in the memory to achieve a function. Each of the terminal device 26a and the terminal device 26b includes a display device (not illustrated) that displays information such as a state of a target system and an input device (not illustrated) that generates an input signal corresponding to an input content by a system administrator or the like.

### [Example of Countermeasure Target]

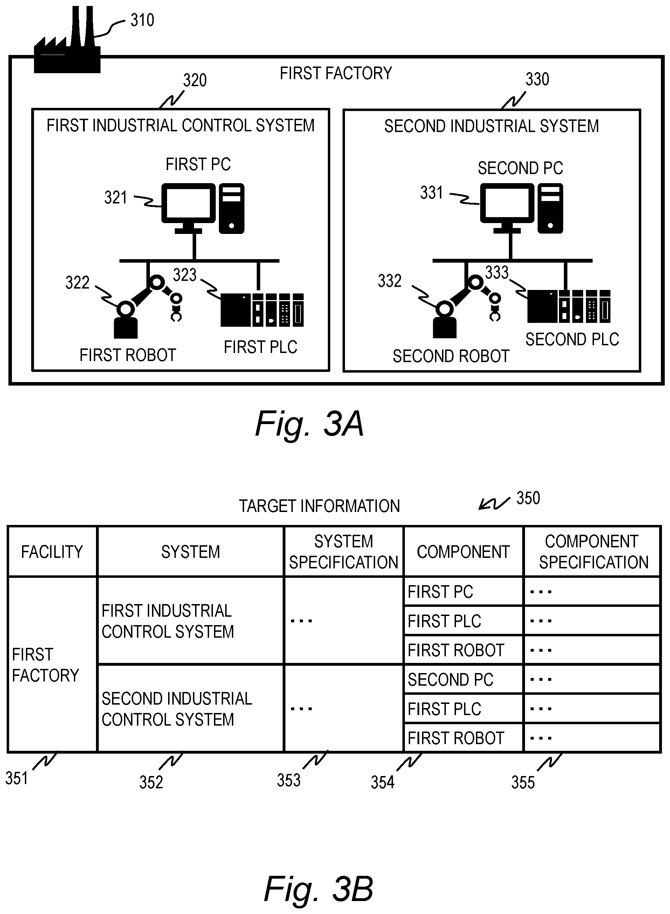

FIG. 3A is an explanatory diagram illustrating an example of the countermeasure target. In FIG. 3A, a first factory 310 is an example of the countermeasure target. The first factory 310 includes a first industrial control system 320 and a second industrial control system 330. The first industrial control system 320 includes a first personal computer (PC) 321, a first robot 322, and a first programmable logic controller (PLC) 323, all of which are components. The second industrial control system 330 includes a second PC 331, a second robot 332, and a second PLC 333, all of which are components.

The first industrial control system 320 is a system that manufactures a product by using the first robot 322. The second industrial control system 330 is a system that transports and sorts products by using the second robot 332.

The first PC 321 is a component that sets the first robot 322 and the first PLC 323. The second PC 331 is a component that sets the second robot 332 and the second PLC 333.

The first robot 322 is a component controlled by the first PLC 323 and used for manufacturing a product. The second robot 332 is a component controlled by the second PLC 333 and used for transporting and sorting products.

The first PLC 323 is a component that controls the first robot 322 on the basis of the control content set by the first PC 321. The second PLC 333 is a component that controls the second robot 332 on the basis of the control content set by the second PC 331.

FIG. 3B is a diagram illustrating a data configuration example of the target information input by the countermeasure target information input unit 120. An example of target information 350 in FIG. 3B is information corresponding to the countermeasure target in FIG. 3A. The target information 350 includes, for example, a facility column 351, a system column 352, a system specification column 353, a component column 354, and a component specification column 355.

The facility column 351 holds information indicating a facility as the countermeasure target. The system column 352 holds information indicating a system of the facility. The system specification column 353 holds information indicating a specification of the system (information regarding a constraint condition of the system). The component column 354 holds information indicating a component included in the system. The component specification column 355 holds information indicating a specification of the component (information regarding a constraint condition of the component).

### [Countermeasure Content Table]

FIG. 4 is a diagram illustrating a data configuration example of the countermeasure content table 400. The countermeasure content table 400 includes, for example, a countermeasure column 410, a corresponding threat column 420, a target level column 430, and a constraint condition column 440. The countermeasure content table 400 is created in advance according to an input of the engineer, the administrator, or the like, for example, and is stored in the auxiliary storage device 24.

The countermeasure column 410 stores information indicating a content of a countermeasure (hereinafter, also referred to as "countermeasure content"). Information indicating a threat event that can be prevented by the countermeasure content is stored in the corresponding threat column 420.

In the example of FIG. 4, "parameter rewriting" and "information theft" are registered as corresponding threat events for the countermeasure content of "use of encryption function". Similarly, the corresponding threat event of the countermeasure content "use of restriction on access via network" is "parameter rewriting". In addition, the corresponding threat element of the countermeasure content "strengthening of authentication during terminal use" is "parameter rewriting". In addition, the corresponding threat element of the countermeasure content "use of input content verification function" is "parameter rewriting".

Information indicating a level at which the countermeasure content is implemented is stored in the target level column 430. In the example of FIG. 4, "component" is registered as the target level for the countermeasure content of "use of encryption function". Similarly, the target level at which the countermeasure content "use of restriction on access via network" is implemented is "system". In addition, the target level at which the countermeasure content "strengthening of authentication during terminal use" is implemented is "operation". In addition, the target level at which the countermeasure content "use of input content verification function" is implemented is "component". Note that there may be a plurality of target levels at which one countermeasure content can be implemented.

When a security countermeasure at the level of the operation of the entire facility is performed, the effect of the security countermeasure is also exerted on a system (and the component included in the system) included in the facility. In addition, when a security countermeasure at the level of a system is performed, the effect of the security countermeasure is also exerted on a component included in the system. In this way, the target level is in an inclusive relationship ("operation" encompasses "system" (and "component") and "system" encompasses "component").

The constraint condition column 440 stores information indicating a constraint condition required for the system or component indicated by the target level, in order to implement the countermeasure indicated by the countermeasure column 410. As described above, the constraint condition regarding the system includes a condition regarding the system specification (an example of a second constraint condition), and the constraint condition regarding the component includes a condition regarding the component specification (an example of a first constraint condition). Note that, since there is no technical constraint condition on the operation, in the example of FIG. 4, information indicating the constraint condition corresponding to the operation is not stored in the constraint condition column 440.

### [Component Countermeasure Determination Processing]

FIG. 5 is a flowchart illustrating an example of component countermeasure determination processing by the component countermeasure examination unit 150.

Note that, in the following, an example will be described in which the requirement input unit 110 inputs "ensuring information integrity" as a requirement to the security countermeasure determination device 100, and the threat event analysis unit 130 converts "ensuring information integrity", which is a requirement, into "parameter rewriting", which is a threat event. Therefore, in this example, the countermeasure extraction unit 140 outputs, from the countermeasure content table 400, "use of encryption function", "use of restriction on access via network", "strengthening of authentication during terminal use", and "use of input content verification function", which are countermeasure contents corresponding to "parameter rewriting" in the corresponding threat column 420, as a countermeasure content group. In addition, in the present example, it is assumed that the countermeasure target information input unit 120 inputs the target information 350 regarding the first factory 310 (and a system included in the first factory 310, and a component constituting the system) illustrated in FIG. 3B to the security countermeasure determination device 100.

The component countermeasure examination unit 150 acquires target information regarding a component, among the target information input by the countermeasure target information input unit 120 (S501). That is, in the present example, the component countermeasure examination unit 150 acquires target information regarding each of the first PC 321, the first robot 322, the first PLC 323, the second PC 331, the second robot 332, and the second PLC 333.

The component countermeasure examination unit 150 selects (for example, randomly) one component for which a countermeasure is to be examined from unselected components (S502). In an initial step S502, it is assumed that the component countermeasure examination unit 150 selects the first PC 321.

The component countermeasure examination unit 150 determines whether there is a component-level countermeasure that is implementable for the component selected in a most recent step S502 (S503). In the present example, the component countermeasure examination unit 150 refers to the target information regarding the first PC 321 acquired in step S501, to determine whether the component specification of the first PC 321 satisfies the constraint condition of each countermeasure content, which has the target level of "component", in the countermeasure content group extracted by the countermeasure extraction unit 140, thereby determining whether there is a component-level countermeasure that is implementable for the first PC 321.

Hereinafter, it is assumed that the component countermeasure examination unit 150 determines that, for the first PC 321, "use of encryption function" among the component-level countermeasures can be implemented and "use of input content verification function" cannot be implemented. In this case, since there is a component-level countermeasure that is implementable for the first PC 321, the component countermeasure examination unit 150 determines "YES" in step S503, and proceeds to the processing of step S504.

The component countermeasure examination unit 150 transmits, to the countermeasure content output unit 180, "use of encryption function" that is implementable for the first PC 321 determined in a most recent step S503 as the component-level countermeasure (S504).

The component countermeasure examination unit 150 determines whether there is a component for which a component-level countermeasure has not been examined (S506). In the present example, at this stage, the component-level countermeasure is examined for only the first PC 321 among the components, and there is a component such as the first robot 322 for which the component-level countermeasure has not been examined. Thus, the component countermeasure examination unit 150 determines "YES" in step S506, and returns to step S502.

The component countermeasure examination unit 150 selects (for example, randomly) one component for which the component-level countermeasure is to be examined, from the components for which the component-level countermeasure has not been examined (S502). It is assumed that the component countermeasure examination unit 150 selects the first robot 322 in the second step S502.

The component countermeasure examination unit 150 determines whether there is a component-level countermeasure that is implementable for the first robot 322 (S503). In the present example, the component countermeasure examination unit 150 refers to the target information regarding the first robot 322 acquired in step S501, to determine whether the component specification of the first robot 322 satisfies the constraint condition of each countermeasure content, which has the target level of "component", in the countermeasure content group extracted by the countermeasure extraction unit 140, thereby determining whether there is a component-level countermeasure that is implementable for the first robot 322.

Hereinafter, it is assumed that the component countermeasure examination unit 150 determines that there is no component-level countermeasure that is implementable for the first robot 322. In this case, the component countermeasure examination unit 150 determines "NO" in step S503, and proceeds to the processing of step S505.

The component countermeasure examination unit 150 transmits, to the system countermeasure examination unit 160, an additional countermeasure request including information indicating the component determined in the most recent step S503 that there is no component-level countermeasure that is implementable (here, information indicating the first robot 322) and information indicating that an additional countermeasure (at the system level with respect to the system including the component) is required (S505).

The component countermeasure examination unit 150 proceeds to the processing of step S506, and repeats the above procedure until there is no component for which the component-level countermeasure has not been examined. In a case where the component countermeasure examination unit 150 determines that there is no component for which a countermeasure has not been examined, it determines "NO" in step S506, and the component countermeasure determination processing ends.

### [System Countermeasure Determination Processing]

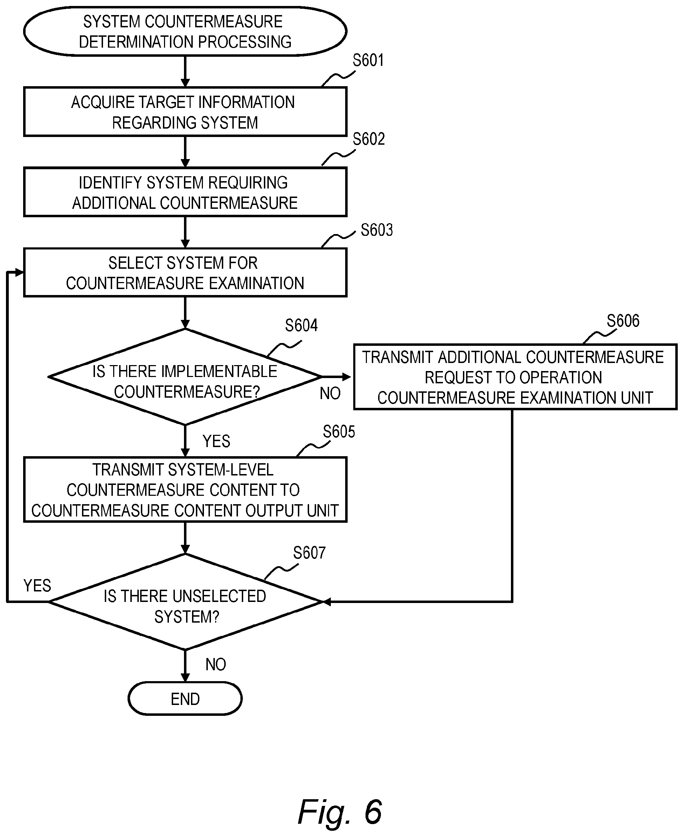

FIG. 6 is a flowchart illustrating an example of system countermeasure examination determination processing by the system countermeasure examination unit 160.

The system countermeasure examination unit 160 acquires target information regarding a system, among the target information input by the countermeasure target information input unit 120 (S601). That is, in the present example, the system countermeasure examination unit 160 acquires target information regarding each of the first industrial control system 320 and the second industrial control system 330.

The system countermeasure examination unit 160 refers to the additional countermeasure request from the component countermeasure examination unit 150 to identify a system requiring a system-level additional countermeasure (S602). In the present example, since there is no component-level countermeasure that is implementable for the first robot 322, the system countermeasure examination unit 160 identifies the first industrial control system 320 including the first robot 322, as the system requiring a system-level additional countermeasure. Note that in the present example, it is assumed that the system countermeasure examination unit 160 also identifies the second industrial control system 330 as a system requiring an additional countermeasure.

The system countermeasure examination unit 160 selects (for example, randomly) one system for which a countermeasure is to be examined, from unselected systems among systems each identified as the system requiring an additional countermeasure in step S602 (S603). In an initial step S603, it is assumed that the system countermeasure examination unit 160 selects the first industrial control system 320.

The system countermeasure examination unit 160 determines whether there is a system-level countermeasure that is implementable for the system selected in a most recent step S603 (S604). In the present example, the system countermeasure examination unit 160 refers to the target information regarding the first industrial control system 320 acquired in step S601, to determine whether the system specification of the first industrial control system 320 satisfies the constraint condition of each countermeasure content, which has the target level of "system", in the countermeasure content group extracted by the countermeasure extraction unit 140, thereby determining whether there is a system-level countermeasure that is implementable for the first industrial control system 320.

Hereinafter, it is assumed that the system countermeasure examination unit 160 determines that "use of restriction on access via network" among the system-level countermeasures can be implemented for the first industrial control system 320. In this case, since there is a system-level countermeasure that is implementable for the first industrial control system 320, the system countermeasure examination unit 160 determines "YES" in step S604, and proceeds to the processing of step S605.

The system countermeasure examination unit 160 transmits, to the countermeasure content output unit 180, "use of restriction on access via network" that is implementable for the first industrial control system 320 determined in a most recent step S604, as a system-level countermeasure (S605).

The system countermeasure examination unit 160 determines whether there is a system for which a system-level countermeasure has not been examined, among the systems each identified as the system requiring an additional countermeasure in step S602 (S607). In the present example, at this stage, among the systems identified in step S602, the system-level countermeasure for only the first industrial control system 320 has been examined, and the system-level countermeasure for the second industrial control system 330 has not been examined. Thus, the system countermeasure examination unit 160 determines "YES" in step S607, and returns to step S603.

The system countermeasure examination unit 160 selects (for example, randomly) one system for which a system-level countermeasure is to be examined, from systems for which a system-level countermeasure has not been examined among the systems each identified as the system requiring an additional countermeasure in step S602 (S603). In a second step S603, it is assumed that the system countermeasure examination unit 160 selects the second industrial control system 330.

The system countermeasure examination unit 160 determines whether there is a system-level countermeasure that is implementable for the second industrial control system 330 (S604). In the present example, the system countermeasure examination unit 160 refers to the target information regarding the second industrial control system 330 acquired in step S601, to determine whether the system specification of the second industrial control system 330 satisfies the constraint condition of each countermeasure content, which has the target level of "system", in the countermeasure content group extracted by the countermeasure extraction unit 140, thereby determining whether there is a system-level countermeasure that is implementable for the second industrial control system 330.

Hereinafter, it is assumed that the system countermeasure examination unit 160 determines that there is no system-level countermeasure that is implementable for the second industrial control system 330. In this case, the system countermeasure examination unit 160 determines "NO" in step S604, and proceeds to the processing of step S606.

The system countermeasure examination unit 160 transmits, to the operation countermeasure examination unit 170, an additional countermeasure request including information indicating the system for which it is determined in the most recent step S604 that there is no implementable system-level countermeasure (here, information indicating the second industrial control system 330) and information indicating that an additional countermeasure (at the operation level with respect to the entire facility including the second industrial control system 330) is required (S606).

The system countermeasure examination unit 160 proceeds to the processing of step S607, and repeats the above procedure until there is no system for which a system-level countermeasure has not been examined, among the systems each identified as the system requiring an additional countermeasure in step S602. In a case where the system countermeasure examination unit 160 determines that there is no system for which a system-level countermeasure has not been examined, among the systems each identified as the system requiring an additional countermeasure in step S602, it is determined "NO" in the determination of step S607, and the system countermeasure determination processing ends.

### [Operation Countermeasure Determination Processing]

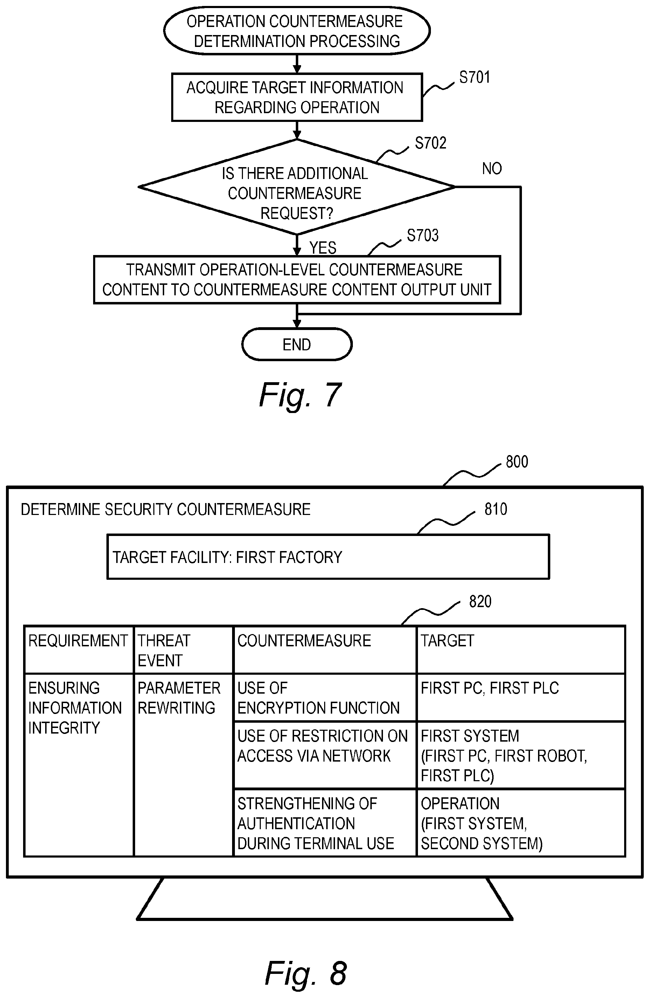

FIG. 7 is a flowchart illustrating an example of operation countermeasure examination determination processing by the operation countermeasure examination unit 170.

The operation countermeasure examination unit 170 acquires target information regarding an operation of a facility or equipment included in the facility, among the target information input by the countermeasure target information input unit 120 (S701). That is, in the present example, the operation countermeasure examination unit 170 acquires target information regarding an operation of the first factory 310.

The operation countermeasure examination unit 170 determines whether an additional countermeasure request has been received from the system countermeasure examination unit 160 (S702). In the present example, since the operation countermeasure examination unit 170 receives the additional countermeasure request from the system countermeasure examination unit 160, "YES" is determined in step S702, and proceeds to the processing of step S703.

The operation countermeasure examination unit 170 transmits, as the operation-level countermeasure, "strengthening of authentication during terminal use", which is the countermeasure content having the target level of "operation", in the countermeasure content group extracted by the countermeasure extraction unit 140, to the countermeasure content output unit 180 (S703).

On the other hand, when it is determined that the additional countermeasure request has not been received from the system countermeasure examination unit 160, the operation countermeasure examination unit 170 determines "NO" in step S702, and the operation countermeasure determination processing ends.

Note that, in the example of FIG. 6, the system countermeasure examination unit 160 examines a system-level countermeasure only for the system indicated by the additional countermeasure request from the component countermeasure examination unit 150 (that is, a system including a component for which there is no component-level countermeasure). However, the system-level countermeasure may be examined not only for the system indicated by the additional countermeasure request from the component countermeasure examination unit 150 but also for another system (for example, may be all other systems, or may be a system designated by the user among the other systems).

In addition, in the example of FIG. 7, the operation countermeasure examination unit 170 examines the operation-level countermeasure only in a case where the additional countermeasure request is received from the system countermeasure examination unit 160 (that is, a case where there is a system for which there is no system-level countermeasure). However, the operation-level countermeasure may be extracted even in a case where the additional countermeasure request is not received from the system countermeasure examination unit 160.

In a case where the presence or absence of examination of the system-level countermeasure does not depend on a result of examination of the component-level countermeasure, either component countermeasure examination processing or system countermeasure examination processing may be executed first. In addition, in a case where the presence or absence of examination of the operation-level countermeasure does not depend on a result of examination of the system-level countermeasure, either the system countermeasure examination processing or operation countermeasure examination processing may be executed first. In addition, in a case where the presence or absence of examination of the system-level countermeasure does not depend on the result of examination of the component-level countermeasure, and the presence or absence of examination of the operation-level countermeasure does not depend on the result of examination of the system-level countermeasure, an execution order of the component countermeasure examination processing, the system countermeasure examination processing, and the operation countermeasure examination processing does not matter.

### [Example of Countermeasure Content Output]

FIG. 8 is a diagram illustrating a screen configuration example of a countermeasure content output screen output by the countermeasure content output unit 180.

A countermeasure content output screen 800 includes, for example, a target facility display area 810 and a countermeasure content display area 820. In the target facility display area 810, information indicating a target facility of a security countermeasure is displayed. In the present example, in the target facility display area 810, information indicating the first factory 310 is displayed.

In the countermeasure content display area 820, information indicating a content of a countermeasure is displayed. Specifically, for example, the countermeasure content display area 820 displays, in a table format, the requirement acquired by the requirement input unit 110, the threat event converted from the requirement by the threat event analysis unit 130, and information indicating the countermeasure content determined by the component countermeasure examination unit 150, the system countermeasure examination unit 160, and the operation countermeasure examination unit 170. Note that a display format in the countermeasure content display area 820 is not limited to the table format, and may be another format such as a dictionary format.

As described above, the security countermeasure determination device 100 according to the present embodiment converts the requirement based on the legal regulations and standards into a threat event, and examines a security countermeasures against the threat event at least at one of the component level, the system level, or the operation level. Accordingly, the security countermeasure determination device 100 can obtain an implementable countermeasure that satisfies the requirement with low man-hours.

Note that, for example, if a higher-level countermeasure in the inclusive relationship between the target levels, such as an operation-level countermeasure, is taken, the requirement is satisfied to some extent even if a lower-level countermeasure such as a component-level or system-level countermeasure is not taken. However, for example, when only a high-level countermeasure is taken as in a case where only an operation-level countermeasure is taken, in a case where the operation-level countermeasure is broken by an attacker, all components in all systems are exposed to the threat. Therefore, if there is a low-level implementable countermeasure, security is improved by taking the low-level countermeasure rather than taking a high-level countermeasure. On the other hand, when all implementable countermeasures at all levels are taken, man-hours and costs for the countermeasures increase.

In this regard, the security countermeasure determination device 100 according to the present embodiment examines a security countermeasure against a threat event in order from a lower target level (an order of the component level, the system level, or the operation level). That is, the security countermeasure determination device 100 determines a component-level countermeasure for a component for which there is a component-level countermeasure, and the security countermeasure determination device 100 examines a system-level countermeasure for a system including the component in a case where there is a component for which there is no component-level countermeasure, and examines an operation-level countermeasure in a case where there is a system for which there is no system-level countermeasure. Accordingly, the security countermeasure determination device 100 can obtain an implementable countermeasure that satisfies the requirement and achieves, with low man-hours, both security and the man-hours and costs associated with the countermeasure.

Note that, in the present embodiment and another embodiment, an example has been described in which the facility includes an industrial system. However, the security countermeasure determination device 100 can also be applied to a case where the facility includes an arbitrary system such as an information technology (IT) system instead of or in addition to the industrial system. Note that, since the specifications of the elements (CPU, memory, and the like) included in the components included in the industrial control system are generally lower than those of devices included in the IT system, by applying the security countermeasure determination device 100 to the industrial control system and the components included in the industrial control system, it is possible to narrow down the number of implementable countermeasures to a smaller number by considering the component specification, and it is possible to further reduce the number of man-hours for the user to select a countermeasure.

Note that, in the present embodiment and another embodiment, an example has been described in which target levels are three stages of the component level, the system level, and the operation level. However, for example, target levels may be two stages in which any one of the component level, the system level, or the operation level is excluded. In addition, for example, target levels may be four or more levels, such as a case where as a subsystem level is added between the component level and the system level.

### [Second Embodiment]

The security countermeasure determination device 100 (information processing device 20) of the present embodiment makes a determination by directly reflecting an intention of a determiner in determination of a security countermeasure at each of the component level, the system level, and the operation level. In the present embodiment, differences from the first embodiment will be mainly described, and description of the same points as those of the first embodiment will be omitted as appropriate.

### [Configuration Example of Security Countermeasure Determination Device]

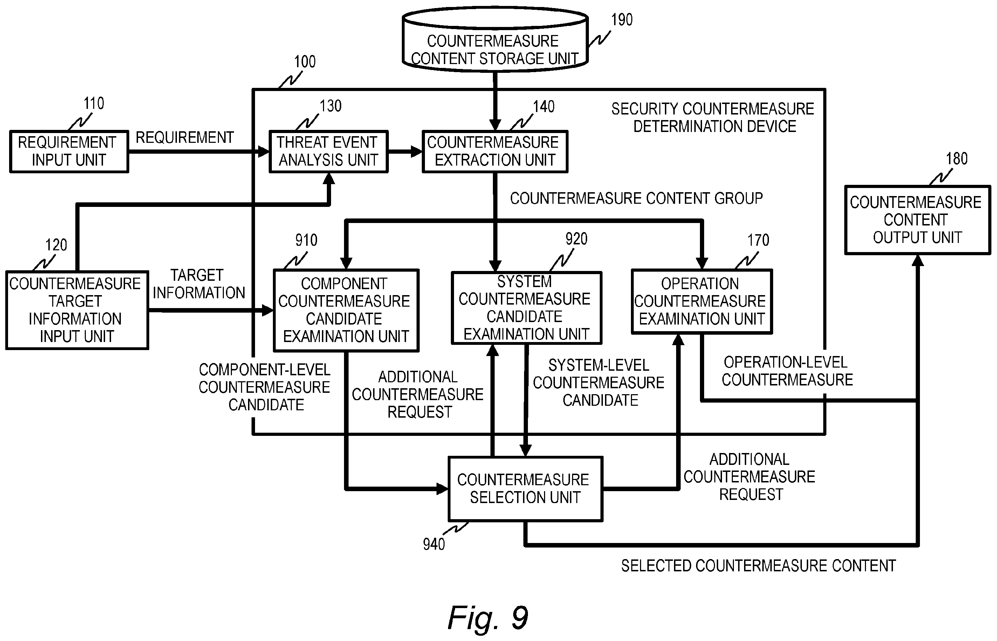

FIG. 9 is a block diagram illustrating a functional configuration example of the security countermeasure determination device 100. The security countermeasure determination device 100 according to the present embodiment is different from the security countermeasure determination device 100 according to the first embodiment (FIG. 1) in that a component countermeasure candidate examination unit 910 and a system countermeasure candidate examination unit 920, all of which are functional units, are included instead of the component countermeasure examination unit 150 and the system countermeasure examination unit 160. In addition, the security countermeasure determination device 100 is connected to a countermeasure selection unit 940.

By using the target information regarding the component among the target information input by the countermeasure target information input unit 120, the component countermeasure candidate examination unit 910 extracts a component-level countermeasure that is implementable, from the countermeasure content group extracted by the countermeasure extraction unit 140 for each component, and outputs, as a component-level countermeasure candidate, the extracted countermeasure to the countermeasure selection unit 940.

By using the target information regarding the system among the target information input by the countermeasure target information input unit 120, the system countermeasure candidate examination unit 920 extracts a system-level countermeasure that is implementable, from the countermeasure content group extracted by the countermeasure extraction unit 140, and outputs, as a system-level countermeasure candidate, the extracted countermeasure to the countermeasure selection unit 940.

The countermeasure selection unit 940 outputs each countermeasure candidate from the component countermeasure candidate examination unit 910 and the system countermeasure candidate examination unit 920, and provides a function of causing a user such as an owner and the administrator of the system to select a countermeasure from among the countermeasure candidates. The countermeasure content output unit 180 outputs the selected countermeasure. In the example of FIG. 9, the countermeasure selection unit 940 is provided outside the security countermeasure determination device 100, but may be incorporated in the security countermeasure determination device 100. The countermeasure selection unit 940 may be configured by the input/output I/F 23.

In addition, in a case where there is a component for which no countermeasure has been selected from among the component-level countermeasure candidates, the countermeasure selection unit 940 outputs, to the system countermeasure candidate examination unit 920, an additional countermeasure request indicating that it is required to examine a system-level countermeasure candidate for a system including the component.

In addition, in a case where there is a system for which no countermeasure has been selected from among the system-level countermeasure candidates, the countermeasure selection unit 940 outputs, to the operation countermeasure examination unit 170, an additional countermeasure request indicating that it is required to examine an operation-level countermeasure candidate for a facility provided with the system. Although a transmission source of the additional countermeasure request received by the operation countermeasure examination unit 170 is different, the processing to be executed is similar to that of the first embodiment.

### [Component Countermeasure Candidate Extraction Processing]

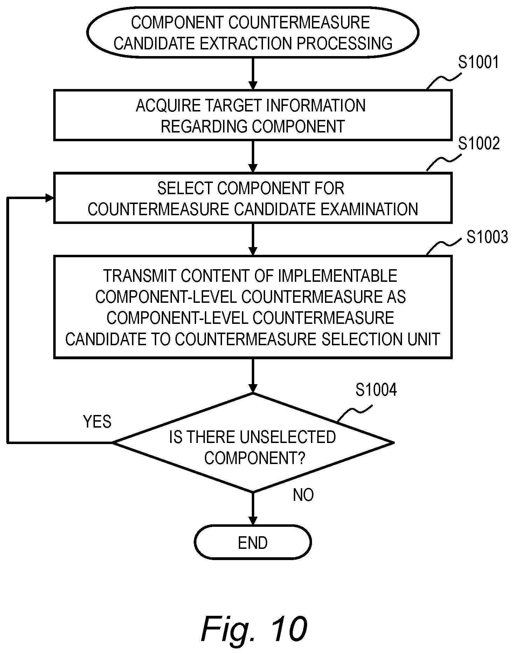

FIG. 10 is a flowchart illustrating an example of component countermeasure candidate extraction processing by the component countermeasure candidate examination unit 910.

The component countermeasure candidate examination unit 910 acquires target information related to a component, among the target information input by the countermeasure target information input unit 120 (S1001). That is, in the present example, the component countermeasure candidate examination unit 910 acquires target information regarding each of the first PC 321, the first robot 322, the first PLC 323, the second PC 331, the second robot 332, and the second PLC 333.

The component countermeasure candidate examination unit 910 selects (for example, randomly) one component for which a countermeasure candidate is to be examined from unselected components (S1002). In an initial step S1002, it is assumed that the component countermeasure candidate examination unit 910 selects the first PC 321.

The component countermeasure candidate examination unit 910 determines, by a method similar to step S503, whether there is a component-level countermeasure that is implementable for the component selected in a most recent step S1002, and transmits, as a component-level countermeasure candidate, information indicating the component and the implementable component-level countermeasure, to the countermeasure selection unit 940 (S1003). Hereinafter, it is assumed that the component countermeasure candidate examination unit 910 determines that, for the first PC 321, "use of encryption function" and "use of input content verification function" among the component-level countermeasures can be implemented.

Note that, in a case where it is determined in step S1003 that there is no component-level countermeasure that is implementable for the component selected in the most recent step S1002, the component countermeasure candidate examination unit 910 transmits, as a component-level countermeasure candidate, information indicating that there is no component-level countermeasure that is implementable for the component, to the countermeasure selection unit 940.

The component countermeasure candidate examination unit 910 determines whether there is a component for which a component-level countermeasure candidate has not been examined (S1004). In a case where it is determined that there is a component for which a component-level countermeasure candidate has not been examined, the component countermeasure candidate examination unit 910 determines "YES" in step S1004 and returns to the processing of step S1002, and in a case where it is determined that there is no component for which a component-level countermeasure candidate has not been examined, the component countermeasure candidate examination unit 910 determines "NO" in step S1004 and ends the component countermeasure candidate extraction processing.

### [System Countermeasure Candidate Extraction Processing]

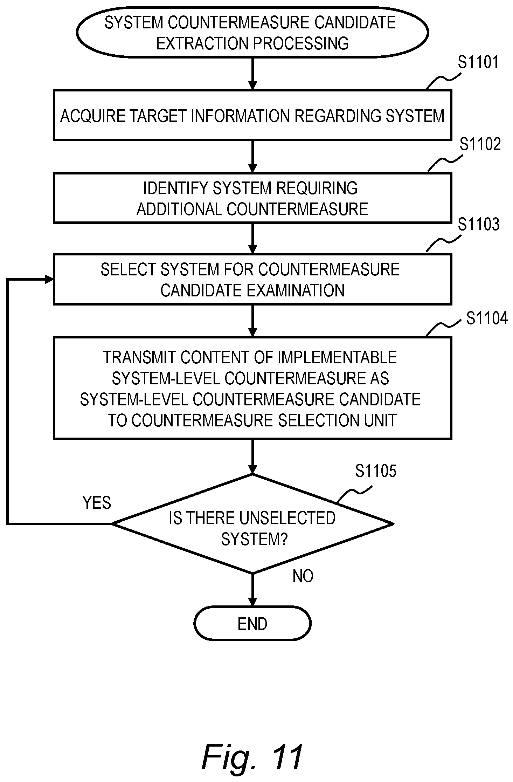

FIG. 11 is a flowchart illustrating an example of system countermeasure candidate extraction processing by the system countermeasure candidate examination unit 920.

The system countermeasure candidate examination unit 920 acquires target information related to a system, among the target information input by the countermeasure target information input unit 120 (S1101).

The system countermeasure candidate examination unit 920 refers to the additional countermeasure request from the countermeasure selection unit 940 to identify a system requiring an additional countermeasure (that is, a system including a component for which no component-level countermeasure has been selected and a system including a component for which there is no component-level countermeasure candidate) (S1102).

The system countermeasure candidate examination unit 920 selects one system for which a system-level countermeasure candidate is to be examined, from unselected systems among the systems identified in step S1102 as requiring an additional countermeasure (S1103).

The system countermeasure candidate examination unit 920 determines, by a method similar to that in step S604, whether there is a countermeasure that is implementable for the system selected in a most recent step S1103, and transmits, as a system-level countermeasure candidate, information indicating the system and the implementable system-level countermeasure, to the countermeasure selection unit 940 (S1104).

Note that, in a case where it is determined in step S1104 that there is no system-level countermeasure that is implementable for the system selected in the most recent step S1103, the system countermeasure candidate examination unit 920 transmits, as a system-level countermeasure candidate, information indicating that there is no system-level countermeasure that is implementable for the system, to the countermeasure selection unit 940.

The system countermeasure candidate examination unit 920 determines whether there is a system for which a system-level countermeasure candidate has not been examined, among the systems identified in step S1102 as requiring an additional countermeasure (S1105). In a case where it is determined that there is a system for which a system-level countermeasure candidate has not been examined among the systems identified in step S1102 as requiring an additional countermeasure, the system countermeasure candidate examination unit 920 determines "YES" in step S1105 and returns to the processing of step S1103, and in a case where it is determined that there is no system for which a system-level countermeasure candidate has not been examined, the system countermeasure candidate examination unit 920 determines "NO" in step S1105 and ends the system countermeasure candidate extraction processing.

### [Countermeasure Selection Processing]

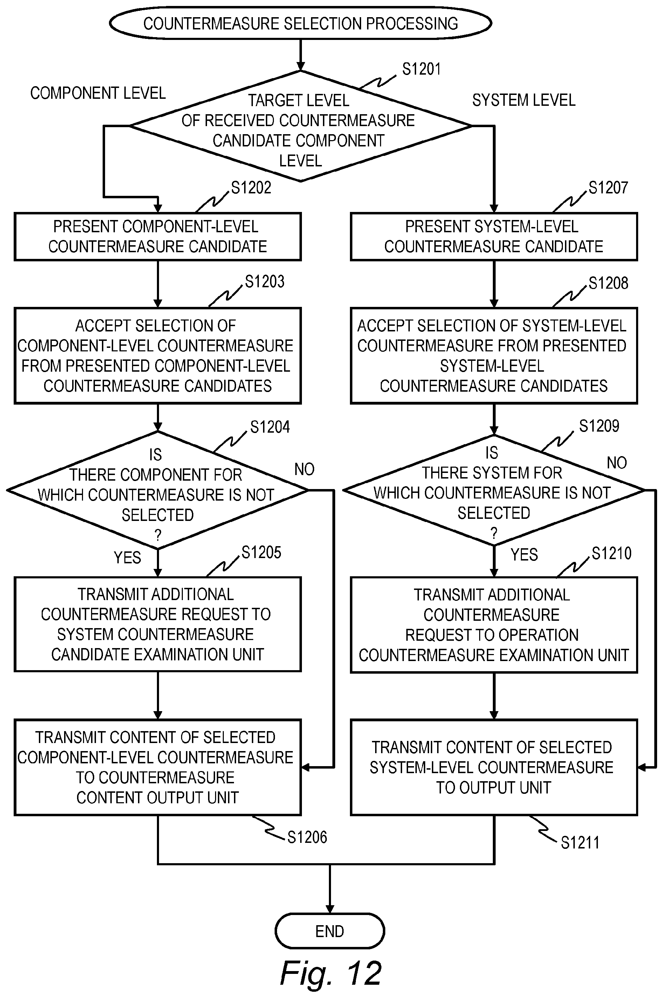

FIG. 12 is a flowchart illustrating an example of countermeasure selection processing by the countermeasure selection unit 940.

The countermeasure selection unit 940 determines the target level of the received countermeasure candidate (S1201). That is, in step S1201, the countermeasure selection unit 940 determines whether a component-level countermeasure candidate has been received from the component countermeasure candidate examination unit 910 or a system-level countermeasure candidate has been received from the system countermeasure candidate examination unit 920.

If it is determined that the component-level countermeasure candidate has been received (S1201: component level), the countermeasure selection unit 940 presents the received component-level countermeasure candidate on a selection screen to be described later (S1202). Note that the countermeasure selection unit 940 presents, on the selection screen, information indicating that there is no component-level countermeasure candidate for a component for which it is determined by the component countermeasure candidate examination unit 910 that there is no component-level countermeasure candidate.

The countermeasure selection unit 940 accepts selection of a component-level countermeasure from the component-level countermeasure candidates according to an input via the selection screen (S1203). Note that, although there is a component-level countermeasure candidate, the user can reject selection of a component-level countermeasure from the component-level countermeasure candidates (that is, does not select the component-level countermeasure for the component).

The countermeasure selection unit 940 determines whether there is a component for which no component-level countermeasure has been selected in the selection in step S1203 (S1204). Note that the countermeasure selection unit 940 also handles, as a component for which no countermeasure has been selected, a component for which it is determined by the component countermeasure candidate examination unit 910 that there is no component-level countermeasure candidate that is implementable.

If it is determined that there is a component for which no component-level countermeasure has been selected (S1204: YES), the countermeasure selection unit 940 transmits, to the system countermeasure candidate examination unit 920, an additional countermeasure request indicating that a system-level countermeasure for a system including the component is required (S1205). For each component for which a component-level countermeasure has been selected, the countermeasure selection unit 940 transmits, to the countermeasure content output unit 180, information indicating a content of the selected component-level countermeasure (S1206), and ends the selection processing.

If it is determined that the component-level countermeasure has been selected for each of all the components (S1204: NO), for each of all the components, the countermeasure selection unit 940 transmits, to the countermeasure content output unit 180, information indicating the content of the selected component-level countermeasure (S1206), and ends the selection processing.

If it is determined that the system-level countermeasure candidate has been received (S1201: system level), the countermeasure selection unit 940 presents the received system-level countermeasure candidate on the selection screen (S1207). Note that the countermeasure selection unit 940 presents, on the selection screen, information indicating that there is no system-level countermeasure candidate for a system for which it is determined by the system countermeasure candidate examination unit 920 that there is no system-level countermeasure candidate.

The countermeasure selection unit 940 accepts selection of a system-level countermeasure from the system-level countermeasure candidates according to an input via the selection screen (S1208). Note that, although there is a system-level countermeasure candidate, the user can reject selection of a system-level countermeasure from the system-level countermeasure candidates (that is, does not select the system-level countermeasure for the system).

The countermeasure selection unit 940 determines whether there is a system for which no system-level countermeasure has been selected in the selection in step S1208 (S1209). Note that the countermeasure selection unit 940 also handles a system for which it is determined by the system countermeasure candidate examination unit 920 that there is no system-level countermeasure candidate that is implementable, as a system for which no countermeasure has been selected.

If it is determined that there is a system for which no system-level countermeasure has been selected among the systems that have received the system-level countermeasure candidates (S1209: YES), the countermeasure selection unit 940 transmits, to the operation countermeasure examination unit 170, an additional countermeasure request indicating that an operation-level countermeasure is required (S1210). For each of the systems for which a system-level countermeasure has been selected, the countermeasure selection unit 940 transmits, to the countermeasure content output unit 180, information indicating a content of the selected system-level countermeasure (S1211), and ends the selection processing.

If it is determined that the system-level countermeasure has been selected for each of all the systems that have received the system-level countermeasure candidates (S1204: NO), for each of all the systems, the countermeasure selection unit 940 transmits, to the countermeasure content output unit 180, information indicating the content of the selected system-level countermeasure (S1211), and ends the selection processing.

### [Screen Output Example of Countermeasure Selection Processing]

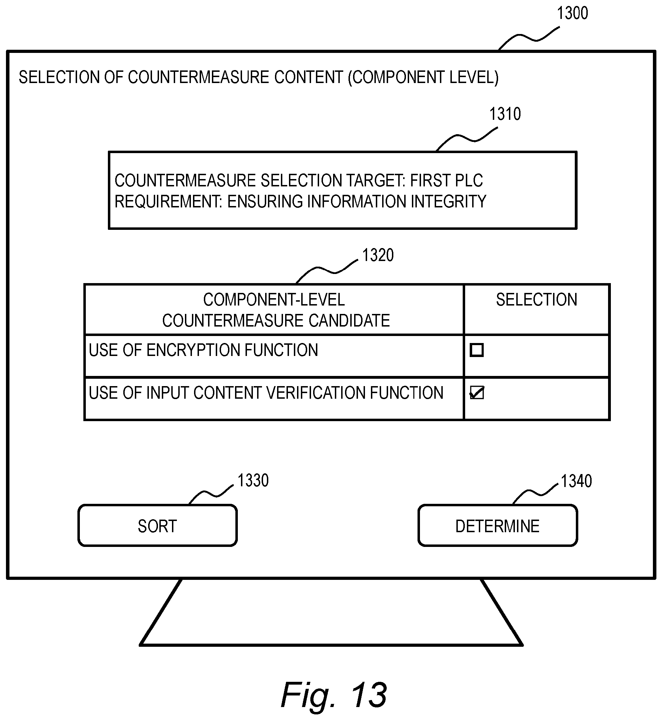

FIG. 13 is a diagram illustrating a screen configuration example of the selection screen output by the countermeasure selection unit 940.

A selection screen 1300 includes, for example, a requirement display area 1310, a countermeasure content selection area 1320, a sort button 1330, and a determination button 1340. In the requirement display area 1310, a target for which a countermeasure is selected from among security countermeasure candidates and a requirement based on the legal regulations and standards are displayed. In the countermeasure content selection area 1320, a countermeasure candidate of the target and a check box for selecting a countermeasure from among the countermeasure candidates are displayed.

In the example of FIG. 13, in the requirement display area 1310, information indicating the first PLC 323 as the target of the security countermeasure is displayed, and "ensuring information integrity" is displayed as the requirement based on the legal regulations and standards. In addition, in the example of FIG. 13, in the countermeasure content selection area 1320, "use of encryption function" and "use of input content verification function" are displayed as countermeasure candidates, and "use of input content verification function" is selected as a countermeasure.

When the sort button 1330 is selected, the countermeasure candidates displayed in the countermeasure content selection area 1320 are sorted. When the determination button 1340 is selected, the countermeasure content selected in the countermeasure content selection area 1320 is determined for the target shown in the requirement display area 1310, and the screen shifts to the selection screen 1300 for a next target (for example, a following component or system).

Note that, when the determination button 1340 is selected in a state where none of the check boxes in the countermeasure content selection area 1320 is selected, it is assumed that the user has rejected all the countermeasure candidates for the target (that is, none of the countermeasure candidates has been selected as a countermeasure).

The security countermeasure determination device 100 of the present embodiment can determine the security countermeasure at each level of the component and the system through the operation of the user, and thus can determine the security countermeasure directly reflecting the intention of the user. In particular, in the present embodiment, even in a case where there is a component-level countermeasure candidate for each of all components of a certain system, it is possible to examine a system-level countermeasure for the system depending on a result of selection by the user. Similarly, in the present embodiment, even in a case where there is a system-level countermeasure candidate for each of all systems for which the system-level countermeasure candidate has been examined, it is possible to examine an operation-level countermeasure depending on a result of selection by the user.

### [Third Embodiment]

In the security countermeasure determination device 100 (information processing device 20) of the present embodiment, a user such as an operator, an administrator, or a system designer of a system evaluates a content of an output countermeasure, and reflects the evaluation on an output screen of the countermeasure content. In the present embodiment, differences from the first embodiment will be mainly described, and description of the same points as those of the first embodiment will be omitted as appropriate.

### [Configuration of Security Countermeasure Determination Device]

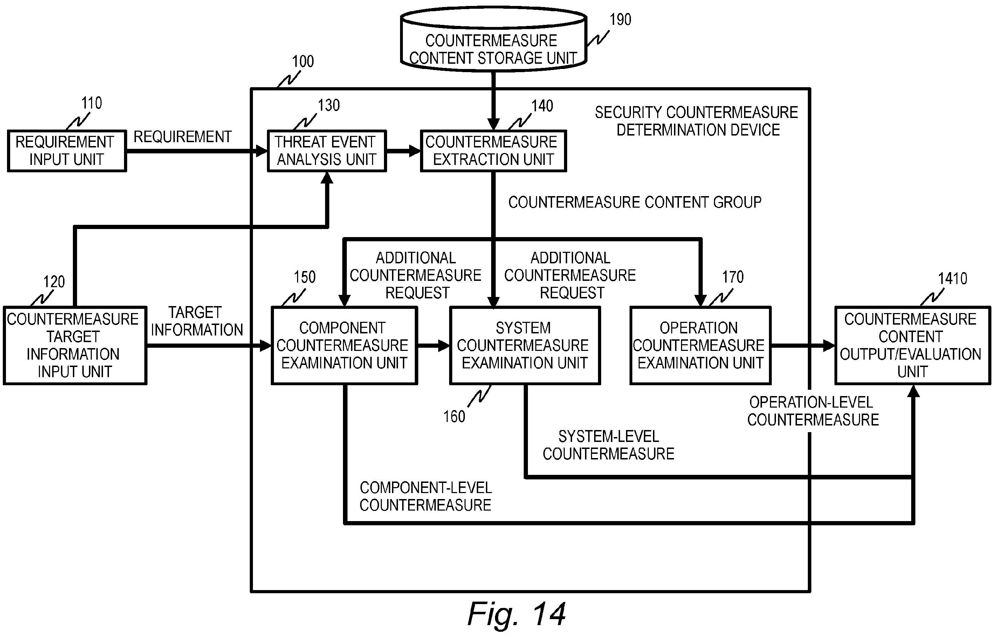

FIG. 14 is a block diagram illustrating a functional configuration example of the security countermeasure determination device 100. The security countermeasure determination device 100 according to the present embodiment is different from the security countermeasure determination device 100 according to the first embodiment in that the security countermeasure determination device is connected to a countermeasure content output/evaluation unit 1410 instead of the countermeasure content output unit 180.

The countermeasure content output/evaluation unit 1410 outputs information indicating the component-level countermeasure output from the component countermeasure examination unit 150, the system-level countermeasure output from the system countermeasure examination unit 160, and the operation-level countermeasure output from the operation countermeasure examination unit 170, and information indicating evaluation of each countermeasure to the display screens of the terminal device 26a and the terminal device 26b connected to the security countermeasure determination device 100.

In addition, the countermeasure content output/evaluation unit 1410 accepts an input of evaluation of the component-level countermeasure, the system-level countermeasure, and the operation-level countermeasure, and stores the input evaluation in the countermeasure content table 400.

In the example of FIG. 14, the countermeasure content output/evaluation unit 1410 is provided outside the security countermeasure determination device 100, but may be incorporated in the security countermeasure determination device 100. The countermeasure content output/evaluation unit 1410 may be configured by the input/output I/F 23.

### [Countermeasure Content Table]

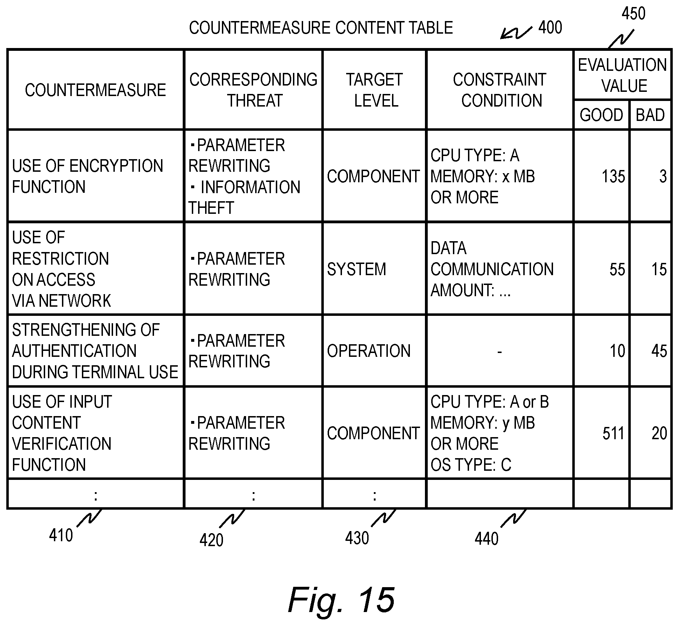

FIG. 15 is a diagram illustrating a data configuration example of the countermeasure content table 400. The countermeasure content table 400 of the present embodiment is different from the countermeasure content table 400 of the first embodiment in that an evaluation value column 450 is further included.

Information indicating an evaluation value given by the user for each countermeasure content of each target level is stored in the evaluation value column 450. In the example of FIG. 15, the evaluation value column 450 stores the number of users who have given a GOOD evaluation to the relevant countermeasure and the number of users who have given a BAD evaluation to the relevant countermeasure, among the users who have introduced each countermeasure. Note that, an evaluation value in any quantitative or qualitative form that can express superiority or inferiority of each countermeasure may be used, for example, such that the user who has introduced each countermeasure may select an evaluation value from predetermined stages (for example, five stages), and an average value of the selected evaluation values may be stored in the evaluation value column 450.

Note that, for example, the countermeasure content output/evaluation unit 1410 displays a screen for receiving an input of the evaluation value of each countermeasure at each target level, accepts, via the screen, the input of the evaluation value from the user who has introduced each countermeasure, and updates the value of the evaluation value column 450 according to the input evaluation value. The value of the evaluation value column 450 can be referred by the user as a criterion for the user to determine superiority or inferiority of the component-level countermeasure determined by the component countermeasure examination unit 150, superiority or inferiority of the system-level countermeasure determined by the system countermeasure examination unit 160, superiority or inferiority of the operation-level countermeasure determined by the operation countermeasure examination unit 170, or superiority or inferiority of the content of the selected countermeasure determined by the countermeasure selection unit 940.

### [Screen Output Example of Countermeasure Selection Processing]

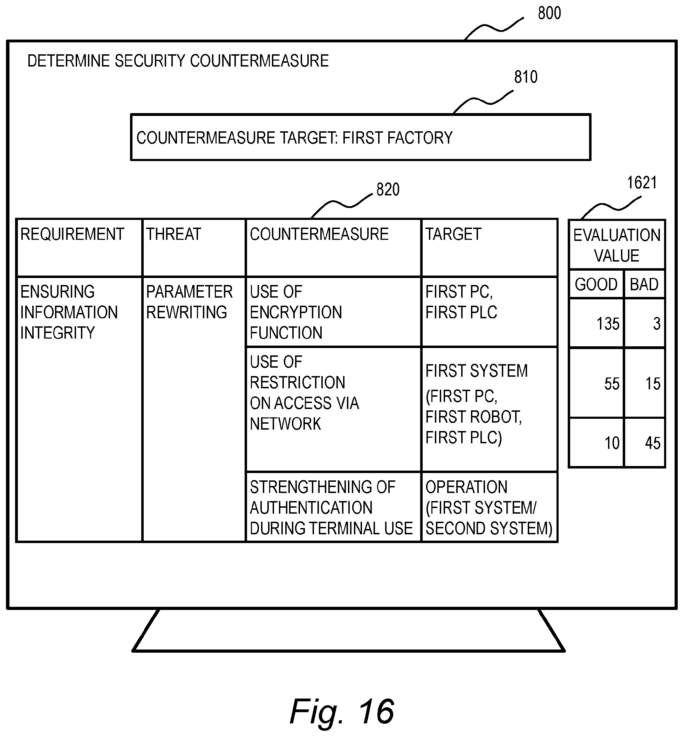

FIG. 16 is a diagram illustrating a screen configuration example of the countermeasure content output screen 800 output by the countermeasure content output/evaluation unit 1410.

The countermeasure content output screen 800 is different from the countermeasure content output screen 800 of the first embodiment in that an evaluation value display area 1621 is further included. In the evaluation value display area 1621, an evaluation value corresponding to each countermeasure in the countermeasure content table 400 is displayed.

In the example of FIG. 16, "use of encryption function" which is a countermeasure content, is given 135 "GOOD" evaluations and 3 "BAD" evaluations, "use of restriction on access via network" which is a countermeasure content, is given 55 "GOOD" evaluations and 15 "BAD" evaluations, and "strengthening of authentication during terminal use" which is a countermeasure content, is given 10 "GOOD" evaluations and 45 "BAD" evaluations.

As described above, in the security countermeasure determination device 100 according to the present embodiment, the user such as an operator, an administrator, or a system designer of a system evaluates the content of output countermeasure, and records the evaluation in the countermeasure content table 400. Accordingly, the security countermeasure determination device 100 can present, to the user, information serving as a criterion for determining superiority or inferiority of a countermeasure content together with the countermeasure content, and can support the user in selecting a countermeasure.

Note that the present embodiment may be applied in the second embodiment. In this case, for example, the evaluation value of the countermeasure may be displayed together with the presented candidate of the countermeasure on the selection screen 1300 described in FIG. 13.

Note that the present invention is not limited to the above-described embodiments, and it is obvious that various other application examples and modifications can be taken without departing from the gist of the present invention described in the claims. For example, the above-described embodiments have been described in detail and specifically in order to describe the present invention in an easy-to-understand manner, and are not necessarily limited to those including all the described components. In addition, a part of the configuration of one embodiment can be replaced with a component of another embodiment. In addition, the configuration of one embodiment can be added with a component of another embodiment. In addition, another component can be added to a part of the configuration of each embodiment, and a part of the configuration of each embodiment can be deleted, or replaced with another configuration.

For example, the function of the security countermeasure determination device 100 in the above-described embodiments may be incorporated in a main element (for example, the first PC 321) in the target system. In addition, one or more elements or each element in the target system may have the function of the security countermeasure determination device 100.

The above-described configurations, functions, and processing units, for all or a part of them, may be implemented by hardware. A processor device in a broad sense such as a field programmable gate array (FPGA) or an application specific integrated circuit (ASIC) may be used as the hardware. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. A security countermeasure determination device comprising:
a processor; and a memory,
the memory being configured to hold:
target information indicating a target system of a security countermeasure, a specification of the target system, a target component included in the target system, and a specification of the target component; and
countermeasure content information indicating a first-level countermeasure that is a security countermeasure for a component, a first constraint condition related to a specification of the component for implementing the first-level countermeasure, a second-level countermeasure that is a security countermeasure for a system, and a second constraint condition related to a specification of the system for implementing the second-level countermeasure, and
the processor being configured to:
execute first-level countermeasure identifying processing of identifying a first-level countermeasure that is implementable for the target component, on a basis of the specification of the target component and the first constraint condition;
execute second-level countermeasure identifying processing of identifying a second-level countermeasure that is implementable for the target system, on a basis of the specification of the target system and the second constraint condition; and
generate data for displaying the identified first-level countermeasure and the identified second-level countermeasure.

2. The security countermeasure determination device according to claim 1,
wherein the processor is configured to execute, when it is determined in the first-level countermeasure identifying processing that there is a target component for which there is no first-level countermeasure that is implementable, the second-level countermeasure identifying processing on a target system including the target component.

3. The security countermeasure determination device according to claim 1,
wherein the countermeasure content information further indicates a third-level countermeasure that is a security countermeasure for an operation of a facility, and
wherein the processor is configured to generate data for displaying the third-level countermeasure.

4. The security countermeasure determination device according to claim 3,
wherein the target information further indicates a target facility including the target system, and
wherein the processor is configured to:
in a case where it is determined in the first-level countermeasure identifying processing that there is a target component for which there is no first-level countermeasure that is implementable, execute the second-level countermeasure identifying processing on a target system including the target component; and
in a case where it is determined in the second-level countermeasure identifying processing that there is a target system in which there is no second-level countermeasure that is implementable, generate data for displaying the third-level countermeasure.

5. The security countermeasure determination device according to claim 1,
wherein the processor is configured to:
generate data for displaying a first selection screen for selecting a countermeasure from the identified first-level countermeasure; and
execute the second-level countermeasure identifying processing on a target system including a component for which selection of a countermeasure has been rejected on the first selection screen.

6. The security countermeasure determination device according to claim 5,
wherein the countermeasure content information further indicates a third-level countermeasure that is a security countermeasure for an operation of a facility,
wherein the target information further indicates a target facility including the target system,
data for displaying a second selection screen for selecting a countermeasure from the identified second-level countermeasure is generated, and
data for displaying the third-level countermeasure is generated in a case where it is determined that there is a system for which selection of a countermeasure has been rejected on the second selection screen.

7. The security countermeasure determination device according to claim 1,
wherein the countermeasure content information indicates an evaluation value of each of the first-level countermeasure and the second-level countermeasure, and
wherein the processor is configured to:
acquire an evaluation value of each of the first-level countermeasure and the second-level countermeasure via an input to an input device, and updates an evaluation value in the countermeasure content information on a basis of the acquired evaluation value; and
refer to the countermeasure content information to generate data for displaying the identified first-level countermeasure and the identified second-level countermeasure and evaluation values respectively corresponding thereto.

8. A security countermeasure determination method by a security countermeasure determination device,
the security countermeasure determination device including a processor and a memory,
the memory being configured to hold:
target information indicating a target system of a security countermeasure, a specification of the target system, a target component included in the target system, and a specification of the target component; and
countermeasure content information indicating a first-level countermeasure that is a security countermeasure for a component, a first constraint condition related to a specification of the component for implementing the first-level countermeasure, a second-level countermeasure that is a security countermeasure for a system, and a second constraint condition related to a specification of the system for implementing the second-level countermeasure, and
the security countermeasure determination method comprising:
executing, by the processor, first-level countermeasure identifying processing of identifying a first-level countermeasure that is implementable for the target component, on a basis of the specification of the target component and the first constraint condition;
executing, by the processor, second-level countermeasure identifying processing of identifying a second-level countermeasure that is implementable for the target system, on a basis of the specification of the target system and the second constraint condition;
generating, by the processor, data for displaying the identified first-level countermeasure and the identified second-level countermeasure.
